# EUROPÄISCHE PATENTANMELDUNG

(11) **EP 4 714 910 A1**
(43) Veröffentlichungstag der Anmeldung: **25.03.2026**
(21) Anmeldenummer: 25204302.1
(22) Anmeldetag: 24.09.2025
(51) Int. Cl.: C02F 1/32

(54) **WASSERENTNAHMEVORRICHTUNG MIT UV-REAKTOR**

(30) Priorität: 24.09.2024 DE 102024127497
(71) Anmelder: KWC Aquarotter GmbH, 14974 Ludwigsfelde (DE)
(72) Erfinder: Foels, Torsten, 15738 Zeuthen (DE); Knörck, Thomas, 14547 Beelitz (DE)
(74) Vertreter: Witte, Weller & Partner Patentanwälte mbB

(57) **Zusammenfassung**

Die vorliegende Erfindung betrifft eine Wasserentnahmevorrichtung mit einem Hauptkörper, einem mit dem Hauptkörper verbundenen Anschluss zur Zufuhr von Wasser in den Hauptkörper, einem mit dem Hauptkörper verbunden Auslass zur Abgabe des zugeführten Wassers, und einer Bestrahlungseinheit zur Bestrahlung des zugeführten Wassers mit UV-Licht, wobei die Bestrahlungseinheit im Auslass angeordnet ist. Die Bestrahlungseinheit ist dabei als UV-Reaktor ausgebildet, wobei der UV-Reaktor eine abgeschlossene Reaktorkammer mit einem Zulauf und einem Ablauf für das Wasser aufweist sowie ein an oder in der Reaktorkammer angeordnetes Bestrahlungsmodul, wobei das Bestrahlungsmodul dazu eingerichtet ist, das Wasser in der Reaktorkammer mit UV-Strahlung zur **In**aktivierung von Mikroorganismen in dem Wasser zu bestrahlen.

## Beschreibung

Die Erfindung betrifft eine Wasserentnahmevorrichtung mit einem Hauptkörper, einem mit dem Hauptkörper verbundenen Anschluss zur Zufuhr von Wasser in den Hauptkörper, einem mit dem Hauptkörper verbundenen Auslass zur Abgabe des zugeführten Wassers, und einer Bestrahlungseinheit zur Bestrahlung des zugeführten Wassers mit UV-Licht (ultraviolettem Licht), wobei die Bestrahlungseinheit im Auslass angeordnet ist.

Wasserentnahmevorrichtungen mit Bestrahlungseinheiten sind bereits bekannt. Beispielsweise sind UV-LED Apparaturen bekannt, die beispielsweise unterhalb von Waschbacken oder bei Duschen in die Wasserzuleitungen eingebaut werden können, um zugeführtes Wasser mittels UV-Licht zu desinfizieren. Problematisch an diesen Apparaturen ist, dass sie großen Bauraum benötigen und optisch daher als störend empfunden werden können. Ferner kann nicht ausgeschlossen werden, dass das nach Durchgang durch die Apparatur entkeimte Wasser nicht anschließend im weiteren Wasserkreislauf kontaminiert wird.

Aus der US 2012/0138545 A1 sind Systeme und Verfahren für die Behandlung und Reinigung von Flüssigkeiten (z.B. Wasser) unter Verwendung einer lichtemittierenden Dioden(LED)-Lichtquelle bekannt. Insbesondere wird eine Flüssigkeitsdurchflussleitung mit einer darin angeordneten LED-Lichtquelle und einem photokatalytischen Material offenbart. Die LED-Lichtquelle emittiert ultraviolettes Licht mit einer Peak-Wellenlänge im Bereich zwischen etwa 265 nm und etwa 400 nm. Im Betrieb absorbiert das photokatalytische Material das ultraviolette Licht der LED-Lichtquelle und setzt freie Radikale in die Flüssigkeit frei. Die freien Radikale bauen dann die organischen Substanzen (z B. Bakterien) in der Flüssigkeit ab.

Eine gründliche Desinfektion des Wassers, in der insbesondere auch Legionellen unschädlich gemacht werden, kann durch das in der US 2012/0138545 A1 offenbarte System und Verfahren allerdings nicht erreicht werden.

Tatsächlich nehmen die Fallzahlen der Legionärskrankheit beispielsweise in der Schweiz und in Liechtenstein seit den 1990er Jahren kontinuierlich zu. Dies birgt ein hohes Gesundheitsrisiko, insbesondere für ältere und geschwächte Menschen. Im Schnitt endet die Legionärskrankheit bei 5-10% aller Erkrankten tödlich.

Legionellen befinden sich natürlicherweise im Wasser. Ideale Bedingungen für die Vermehrung der Legionellen bestehen bei stehendem, warmem Wasser, insbesondere wenn dessen Temperatur zwischen 25 und 50°C liegt. Besonders gefährdet für den Befall mit Legionellen sind Trinkwassersysteme, wobei eine erhöhte Konzentration im Trinkwasser zumeist auf fehlender Wasserzirkulation beruht. So kommt es beispielsweise bei zeitweise geringer oder fehlender Wasserentnahme zu stehendem Wasser, sog. Stagnationswasser, und zu Wassertemperaturen, die das Koloniewachstum von Legionellen begünstigen.

Der Erfindung liegt daher die Aufgabe zugrunde, eine Wasserentnahmevorrichtung bereitzustellen, bei der Bakterien, insbesondere Legionellen, und andere Krankheitserreger möglichst zuverlässig beseitigt werden, sodass das an dessen Gebrauchsstelle bzw. Entnahmestelle, d.h. am sog. "point of use", entnommene Wasser möglichst keimfrei ist.

Gemäß einem Aspekt der Erfindung wird diese Aufgabe durch eine Wasserentnahmevorrichtung mit den Merkmalen gemäß Anspruch 1 gelöst. Bei der erfindungsgemäßen Wasserentnahmevorrichtung ist die Bestrahlungseinheit als UV-Reaktor ausgebildet, wobei der UV-Reaktor eine abgeschlossene Reaktorkammer mit einem Zulauf und einem Ablauf für das Wasser aufweist sowie ein an oder in der Reaktorkammer angeordnetes Bestrahlungsmodul, wobei das Bestrahlungsmodul dazu eingerichtet ist, das Wasser in der Reaktorkammer mit UV-Strahlung zur Inaktivierung von Mikroorganismen in dem Wasser zu bestrahlen.

Vorteilhafte Ausgestaltungen und Weiterbildungen der Erfindung ergeben sich aus den abhängigen Ansprüchen.

Bei der Wasserentnahmevorrichtung kann es sich um eine Sanitärarmatur, wie beispielsweise eine Waschtischarmatur, eine Duscharmatur, eine Badewannenarmatur, eine Küchenarmatur usw., ein Urinal, eine Toilette usw. handeln.

Der Hauptkörper der Wasserentnahmevorrichtung ist mit dem Anschluss und dem Auslass verbunden. Insbesondere können der Anschluss und/oder der Auslass an dem Hauptkörper befindlich sein. An dem Hauptkörper der Wasserentnahmevorrichtung befinden sich in der Regel (auch) ein oder mehrere Bedienelemente für die Wasserentnahmevorrichtung, wie beispielsweise Hebel, Druck- oder Drehknöpfe zur Steuerung des Wasserflusses und/oder zur Einstellung der Wassertemperatur.

Die Bestrahlungseinheit befindet sich vorliegend im Auslass, d.h. gleichsam am point of use. Mit anderen Worten wird das Wasser unmittelbar vor dessen Entnahme entkeimt bzw. desinfiziert. Durch die Verwendung eines UV-Reaktors wird das Wasser zuverlässig entkeimt. Dazu wird eine abgeschlossene Reaktorkammer mit einem Zulauf und einem Ablauf verwendet, in der das Wasser sorgfältig desinfiziert wird. Es findet dementsprechend nicht nur eine flüchtige bzw. unkontrollierte Bestrahlung mit UV-Licht statt, sondern eine effektive und kontrollierte Entkeimung. In UV-Reaktoren wird das Wasser nämlich mit einer vorbestimmten Fließgeschwindigkeit durch die Reaktorkammer geleitet und einer vorbestimmten Dosis an UV-Strahlung ausgesetzt, um eine effektive Entkeimung sicherzustellen. Die notwendige Dosis hängt dabei insbesondere von der zu bekämpfenden Bakterien- bzw. Keimart ab. Ferner ist der UV-Reaktor aufgrund seiner Abgeschlossenheit auch im Hinblick auf Sicherheitsaspekte vorteilhaft. Schließlich ist der UV-Reaktor so konzipiert, dass keine UV-Strahlung aus ihm entweichen kann. Ein Gesundheitsrisiko wie bei nicht abgeschlossenen UV-Bestrahlungssystemen besteht mithin nicht.

Die Bestrahlungseinheit ist bevorzugt möglichst nah an der Entnahmestelle des Auslasses angeordnet, also an der Stelle, an der das Wasser aus dem Auslass entnommen werden kann. Bevorzugt beträgt die Entfernung zwischen der Bestrahlungseinheit und der Entnahmestelle des Auslasses höchstens 20 cm, insbesondere bevorzugt höchstens 5 cm, weiter bevorzugt höchstens 1 cm.

Je näher die Bestrahlungseinheit am point of use angeordnet ist, desto höher ist die Wahrscheinlichkeit, dass das an der Entnahmestelle entnehmbare Wasser möglichst keimfrei ist. Eine Gesundheitsschädigung durch verunreinigtes Wasser kann damit nahezu ausgeschlossen werden. Dies ist besonders vorteilhaft in Einrichtungen, wo die Wasserqualität kritisch ist, wie z.B. in Krankenhäusern oder Pflegeheimen.

Die oben genannte Aufgabe ist daher vollständig gelöst.

In einer bevorzugten Ausführungsform ist das Bestrahlungsmodul in bzw. an der Reaktorkammer zulaufseitig angeordnet. Dies hat den Vorteil, dass das Wasser, sobald es in die Reaktorkammer gelangt, mit UV-Strahlung bestrahlt wird. Mit anderen Worten kann damit erreicht werden, dass die Bestrahlungsdauer und mithin die Bestrahlungsdosis erhöht wird und eine bessere Entkeimung erfolgen kann.

Prinzipiell kann das Bestrahlungsmodul auch auslaufseitig, wandseitig oder mittig in/an der Reaktorkammer angeordnet sein. Bei zylinderförmiger Reaktorkammer beispielsweise kann das Bestrahlungsmodul mantelseitig oder mittig entlang der Zylinderachse angeordnet sein.

In einer weiteren bevorzugten Ausführungsform weist der UV-Reaktor ferner einen an oder in der Reaktorkammer angeordneten Vortexerzeuger auf, wobei der Vortexerzeuger dazu eingerichtet eine vortexartige Bewegung des Wassers zwischen dem Zulauf und dem Ablauf zu bewirken.

Mit anderen Worten soll der Vortexerzeuger eine rotationsförmige Bewegung des Wassers in der Reaktorkammer (bspw. um die Kammerachse) bewirken. Durch die Verwirbelung des Wassers wird sichergestellt, dass sich das Wasser in der Kammer vermischt, sodass das Wasser der UV-Bestrahlung in gleichmäßiger Weise ausgesetzt ist und somit (nahezu) vollständig entkeimt werden kann. Ferner kann das Wasser durch die Verwirbelung abrasiv und damit reinigend auf die Reaktorkammer bzw. deren Wände einwirken. Insofern wird Ablagerungen entgegengewirkt, was eine zuverlässige Entkeimung weiter fördert. Darüber hinaus wird über die rotationsförmige bzw. schraubenartige Bewegung des Wassers im Gegensatz zu einer geradlinigen Bewegung erreicht, dass die Verweildauer des Wassers in der Reaktorkammer erhöht wird, was sich ebenfalls positiv auf die Entkeimung auswirkt.

Der Vortexerzeuger kann beispielsweise als ringfömiges Plättchen ausgebildet sein, das eine Einströmung des Wasser in die Kammer nur an dafür vorgesehenen Durchströmabschnitten, zulässt, wobei die Durchströmabschnitte so ausgebildet sind, dass das einströmende Wasser einen Drehimpuls um die Längsachse der Reaktorkammer erhält.

In einer weiteren Ausführungsform weist das Bestrahlungsmodul eine oder mehrere UV-Lichtquellen auf, die dazu eingerichtet sind UV-Licht im Wellenlängenbereich von 200 nm bis 280 nm, bevorzugt im Wellenlängenbereich zwischen 250 nm und 270 nm, insbesondere bevorzugt im Wellenlängenbereich zwischen 260 nm und 270 nm abzustrahlen.

Mit anderen Worten wird bevorzugt UV-C-Licht in dem UV-Reaktor zur Bekämpfung von Keimen eingesetzt. Licht in diesem Wellenlängenbereich hat sich als besonders wirksam für die Entkeimung von Wasser erwiesen. Bei einer Wellenlänge von 254 nm sollte beispielsweise eine Dosis mit ca. 4,7 mJ/(cm^2) ausreichen, um die Anzahl der Keime der Art L. pneumophila und P, aeruginosa um 3-log zu reduzieren. Liegt L. pneumophila in Amöben vor, ist eine etwa doppelt so hohe Dosis erforderlich, um eine 3-log-Reduktion zu erreichen. Es kann davon ausgegangen werden, dass bei Wellenlängen im Bereich von 265 nm bei gleicher Dosis eine etwa 30% höhere Inaktivierung erreicht werden kann.

Das Bestrahlungsmodul weist bevorzugt eine oder mehrere UV-Lichtquellen auf. Diese sind besonders bevorzugt als lichtemittierende Dioden (LEDs) ausgebildet. LEDs haben den Vorteil, dass sie bei geringer Baugröße eine vergleichsweise hohe Bestrahlungsintensität aufweisen. Ferner zeichnen sich LEDs durch ihren geringen Energieverbrauch und ihre geringen thermischen Verluste auf. Darüber hinaus sind LEDs wartungsarm und haben eine hohe Lebensdauer.

Um eine möglichst hohe Bestrahlungsintensität innerhalb der Reaktorkammer gewährleisten zu können, ist es vorteilhaft, wenn die Innenwände der Reaktorkammer im UV-Bereich, insbesondere im UV-C-Bereich hochreflektierend ausgebildet sind. Vor allem volumetrisch kleine Reaktoren profitieren von stark reflektierenden Innenflächen. Als besonders geeignetes Material für die Reaktorkammer, zumindest die Reaktor(innen)wand der Reaktorkammer, hat sich Polytetrafluorethylen (PTFE) herausgestellt. PTFE als Material für die Reaktorkammer bietet neben der hohen Reflektivität weitere signifikante Vorteile, insbesondere in Bezug auf die Anforderungen an Reinheit, Langlebigkeit und chemische Beständigkeit. Besonders bevorzugt kann expandiertes PTFE (ePTFE) für die Reaktorkammer bzw. der Innenwand verwendet werden.

In einer bevorzugten Ausführungsform umfasst die Wasserentnahmevorrichtung ferner eine Versorgungseinrichtung zur Versorgung des UV-Reaktors mit elektrischer Energie.

Die Versorgungseinrichtung ist vorzugsweise innerhalb des Hauptkörpers und/oder innerhalb des Auslasses angeordnet. Die Versorgungseinrichtung kann sowohl stromabwärts als auch stromaufwärts des UV-Reaktors angeordnet sein. Für den Fall, dass die Wasserentnahmevorrichtung beispielsweise als Duscharmatur ausgebildet ist, wobei der Auslass als Brause mit einem Griff und einem Brausenkopf ausgebildet ist, kann der UV-Reaktor z.B. im Griff und die Versorgungseinrichtung im Brausenkopf angeordnet sein. Bei einer Ausbildung der Wasserentnahmevorrichtung als Waschtischarmatur kann die Versorgungseinrichtung auslassseitig im Hauptkörper angeordnet sein.

Bei der Versorgungseinrichtung kann es sich um eine Batterie handeln. Denkbar ist aber auch, dass die Versorgungseinrichtung als Transformator ausgebildet ist, der dazu eingerichtet ist, an ein Stromnetz angeschlossen zu werden.

In einer besonders bevorzugten Ausführungsform der Wasserentnahmevorrichtung weist die Versorgungseinrichtung eine Turbine und einen mit der Turbine verbundenen Generator auf, wobei die Turbine dazu eingerichtet ist, von dem zugeführten Wasser in Rotation versetzt zu werden, und der Generator dazu eingerichtet ist, die Rotationsenergie aus der Turbine in elektrische Energie umzuwandeln.

Diese Ausführungsform bietet den Vorteil, dass sich die Wasserentnahmevorrichtung selbst mit Energie versorgen kann. Der Anschluss an ein Stromnetz oder der Wechsel von Batterien sind damit überflüssig. Dementsprechend kann die Wasserentnahmevorrichtung in dieser Ausführungsform quasi "sorgenfrei" betrieben werden. Eine Nachrüstung bestehender Wasserentnahmevorrichtungen durch Einbau eines UV-Reaktors in den Auslass ist mithin problemlos auch für Wasserentnahmevorrichtungen, die über keinen Stromanschluss verfügen, möglich.

Vorzugsweise ist die als Turbinen-Generator-Kombination ausgebildete Versorgungseinrichtung ferner mit einer Erfassungseinheit zur Erfassung von Daten hinsichtlich der Fließgeschwindkeit und/oder der Temperatur des Wassers ausgebildet. Es ist denkbar, dass die erfassten Daten zur Weiterverarbeitung einer Elektronikeinheit der Wasserentnahmevorrichtung zur Verfügung gestellt werden.

In einer anderen Ausführungsform ist der Auslass trennbar mit dem Hauptkörper verbunden.

Der Auslass kann über eine lösbare Verbindung, wie etwa eine Steck- oder Schraubverbindung, lösbar bzw. trennbar mit dem Hauptkörper verbunden sein. Durch die lösbare Verbindung zwischen Auslass und Hauptkörper kann somit auch der UV-Reaktor vom Hauptkörper getrennt werden. Damit wird erreicht, dass der UV-Reaktor leichter zugänglich ist, was insbesondere für Wartungs- oder Reinigungszwecke von Vorteil ist. Beispielsweise kann so die Bestrahlungseinheit in einfacher Weise gereinigt werden, sodass eine ausreichende Bestrahlungsintensität gewährleistet werden kann.

In einer bevorzugten Ausführungsform ist die Wasserentnahmevorrichtung als elektronisch gesteuerte Wasserentnahmevorrichtung mit einer Elektronikeinheit ausgebildet.

Das bedeutet, dass eine oder mehrere Funktionen der Wasserentnahmevorrichtung über die Elektronikeinheit elektronisch gesteuert werden können. Diese Funktionen können neben oder alternativ zur herkömmlichen Wasserabgabe (d.h. ob oder ob kein Wasser abgegeben werden soll) auch die Temperatur, die Strahlstärke und/oder die Fließgeschwindigkeit des abzugebenden Wassers, Hygienespülungen, thermische Desinfektionen, den UV-Reaktor (insbesondere dessen Aktivierung oder Deaktivierung), Hinzunahme von Strom aus einer Batterie oder aus dem Stromnetz usw. betreffen. Insofern kann die Elektronikeinheit als "interne Steuereinheit" der Wasserentnahmevorrichtung betrachtet werden. Die Steuerbefehle können dabei in die Elektronikeinheit (vor)programmiert sein. Es ist aber auch denkbar, dass die Elektronikeinheit von einer (externen, übergeordneten) Steuereinheit Steuerbefehle erhält. Die Elektronikeinheit ist in diesem Fall dazu eingerichtet, die von der Steuereinheit erhaltenen Befehle an die entsprechenden Bauteile in der Wasserentnahmevorrichtung weiterzugeben.

Die Elektronikeinheit ist vorzugsweise dazu eingerichtet, mit Strom von der Versorgungseinheit versorgt zu werden.

Die elektronisch gesteuerte Wasserentnahmevorrichtung kann eine Sensoreinheit aufweisen, die dazu eingerichtet ist, ein Eindringen einer Person oder eines Gegenstands in deren Detektionsbereich zu erfassen und in Abhängigkeit von der Erfassung ein Signal an die Elektronikeinheit zur Steuerung von Funktionen der Wasserentnahmevorrichtung abzugeben, insbesondere ein Signal zur Steuerung der Wasserabgabe durch die Wasserentnahmevorrichtung abzugeben. Die Sensoreinheit kann z.B. einen optischen oder kapazitiven Näherungssensor aufweisen. Es ist denkbar, dass die Sensoreinheit über die Versorgungseinrichtung mit Strom versorgt wird.

In einer weiteren Ausführungsform umfasst die Wasserentnahmevorrichtung ferner eine Überwachungseinrichtung zur Überwachung der Leistung des UV-Reaktors.

Die Überwachung der Leistung kann dabei lediglich darin bestehen zu prüfen, ob der UV-Reaktor in Betrieb ist oder nicht. Prinzipiell kann die Überwachungseinrichtung aber auch dazu eingerichtet sein, zu überwachen, wie hoch die Leistung des UV-Reaktors ist, wobei sich die Höhe der Leistung beispielsweise an der Bestrahlungsintensität durch die Bestrahlungseinheit bemessen kann. Die Überwachungseinrichtung kann mit der Versorgungseinrichtung zur Stromversorgung verbunden sein. Sie kann ferner mit der Elektronikeinheit verbunden sein und entsprechende Daten, welche die Leistung des UV-Reaktors betreffen, der Elektronikeinheit zur Verfügung stellen. Diese kann dazu eingerichtet sein, die Daten an eine (externe) Steuereinheit weiterzugeben.

Umgekehrt kann die Elektronikeinheit dazu eingerichtet sein, den UV-Reaktor zu steuern, insbesondere den UV-Reaktor in Abhängigkeit von der überwachten Leistung zu steuern. Insbesondere kann vorgesehen sein, dass die Elektronikeinheit dazu eingerichtet ist, die Wellenlänge, Intensität, Dauer und/oder den Zeitpunkt der von dem UV-Reaktor abgegebenen Strahlung zu steuern. Beispielsweise kann die Elektronikeinheit dazu eingerichtet sein, die UV-Strahlung des UV-Reaktors zu aktivieren, wenn sie ein Signal erhält, dass die Wasserqualität des von der Wasserentnahmevorrichtung abgegebenen Wassers einen unteren Grenzwert unterschreitet oder dass eine Hygienespülung, beispielsweise aufgrund einer Fehlfunktion, nicht ausgeführt werden konnte. Ein derartiges Signal kann beispielsweise von einer Wasserqualitätsüberwachungsvorrichtung bzw. einer Fehler-überwachungsvorrichtung erhalten werden. Denkbar ist auch, dass die Elektronikeinheit den UV-Reaktor bei jeder Wasserentnahme oder nach einer bestimmten Anzahl von Wasserentnahmen (mit deaktiviertem UV-Reaktor) aus der Wasserentnahmevorrichtung aktiviert.

Die Wasserentnahmevorrichtung kann in einer weiteren Ausführungsform ferner eine Anzeigeeinrichtung aufweisen, die dazu eingerichtet ist, eine Anzeige in Abhängigkeit von der überwachten Leistung auszugeben.

Die Anzeigeeinrichtung kann beispielsweise ein Lämpchen aufweisen, dass leuchtet, wenn der UV-Reaktor in Betrieb ist, und/oder das nicht leuchtet, wenn der UV-Reaktor nicht in Betrieb ist. Es ist auch denkbar, dass die Leuchtintensität des Lämpchens umso höher ist, je höher die überwachte Leistung des UV-Reaktors ist, beispielsweise je höher die Bestrahlungsintensität durch die Bestrahlungseinheit ist. Ebenso ist eine farbliche Codierung denkbar, wobei die Anzeigeeinrichtung eine erste Farbe anzeigt, wenn der UV-Reaktor nicht in Betrieb ist oder nur eine Leistung unter einer vorbestimmten Leistungsschwelle aufweist, und wobei die Anzeigeeinrichtung eine zweite Farbe anzeigt, wenn der UV-Reaktor in Betrieb ist oder eine Leistung über der vorbestimmten Leistungsschwelle aufweist. Weitere farbliche Abstufungen sind ebenso denkbar. Grundsätzlich könnte die Anzeigeeinrichtung auch als Display ausgebildet sein und Informationen über die überwachte Leistung des UV-Reaktors anzeigen. Neben einer visuellen Anzeigeeinrichtung ist auch eine akustische oder audiovisuelle Anzeigeeinrichtung denkbar.

Die Anzeigeeinrichtung kann am Hauptkörper und/oder am Auslass angeordnet sein. Bevorzugt ist die Anzeigeeinrichtung an der Wasserentnahmevorrichtung derart angeordnet, dass die Anzeige für den Benutzer gut sichtbar und/oder hörbar ist. In jedem Fall bietet die Anzeigeeinrichtung den Vorteil, dass der Benutzer schnell und einfach Informationen über die Leistung des UV-Reaktors erhalten kann.

In einer weiteren Ausführungsform kann die Elektronikeinheit dazu eingerichtet sein, eine Reinigungsspülung durch den Auslass zu veranlassen.

Die Reinigungsspülung kann auch den Hauptkörper betreffen. Bei der Reinigungsspülung kann es sich um eine Hygienespülung handeln, also um eine Spülung zur Entfernung von Stagnationswasser. Um eine noch bessere Entkeimung gewährleisten zu können kann die Reinigungsspülung aber auch als thermische Desinfektion durchgeführt werden, wobei desinfizierendes Warmwasser, insbesondere Wasser mit einer Temperatur von mindestens 70°C, durch den Auslass (und vorteilhaft den Hauptkörper) geleitet wird. Ungeachtet der Art der Reinigungsspülung, trägt die Reinigungsspülung dazu bei, die Wasserentnahmevorrichtung möglichst keimfrei betreiben zu können.

Die Reinigungsspülung kann von der Elektronikeinheit in vorbestimmten Zeitabständen (die in die Elektronikeinheit einprogrammiert sind) oder gemäß eines Steuersignals von einer (externen) Steuereinheit durchgeführt werden. Insofern kann die Reinigungsspülung dazu beitragen, dass auch Wasserentnahmevorrichtungen, die vom Benutzer über längere Zeit nicht benutzt werden, in hygienisch einwandfreiem Zustand bleiben.

In einer Ausführungsform weist die Wasserentnahmevorrichtung eine Aufnahmeeinrichtung zur Aufnahme des Auslasses auf, wobei die Aufnahmeeinrichtung mit einer Abführeinheit zum Abführen des Wassers der Reinigungsspülung eingerichtet ist.

Bei der Aufnahmeeinrichtung kann es sich um eine Buchse, Mulde oder dergleichen handeln. Bevorzugt ist die Aufnahmeeinrichtung dazu eingerichtet, den Auslass kraft-und/oder formschlüssig aufzunehmen. Beispielsweise kann die Aufnahmeeinrichtung eine Klemmvorrichtung zur klemmenden Aufnahme des Auslasses aufweisen. Ebenso denkbar ist eine Magnetvorrichtung zur Aufnahme bzw. zum Halten des Auslasses mittels magnetischer Kraft.

Die Abführeinheit zum Abführen des Wassers der Reinigungsspülung kann als Rohrleitung oder als Wasserrinne ausgebildet sein. Das Wasser kann über die Abführeinheit insbesondere in ein Wasserbecken oder eine Abflussleitung geführt werden. Die Abführeinheit kann als Unterputz- oder als Aufputzabführeinheit ausgebildet sein. Durch die Abführeinheit wird, insbesondere dann, wenn diese als Wasserleitung oder -rinne ausgebildet ist, gleichsam eine gerichtete Reinigungsspülung realisiert.

Beispielsweise kann die Wasserentnahmevorrichtung als Duscharmatur ausgeführt sein, wobei der Auslass als Brause mit einem Griff und einem Brausenkopf ausgebildet ist und wobei insbesondere der Brausenkopf in eine Aufnahmeeinrichtung aufgenommen werden kann. Dabei kann die Aufnahmeeinrichtung eine Halterung für den Brausenkopf sein, die an einer Wand befestigt ist. Wird eine Reinigungsspülung durchgeführt, dringt Wasser aus dem Brausenkopf. Um zu verhindern, dass dieses einfach die Wand hinunterläuft oder womöglich als Stagnationswasser in der Aufnahmeeinrichtung (oder gar in dem Brausenkopf selbst) verbleibt, ist eine Abführeinheit an der Aufnahmevorrichtung vorgesehen. So kann beispielsweise über eine an die Aufnahmeeinheit angeschlossene Rohrleitung das Wasser der Reinigungsspülung einfach abfließen. Die Rohleitung kann aufputz angeordnet sein und in eine Duschwanne münden oder unterputz angeordnet sein und in ein Abwasserrohr münden.

Gemäß einer weiteren Ausführungsform weist die Wasserentnahmevorrichtung ferner eine Kommunikationsvorrichtung auf, die dazu eingerichtet ist mit der Elektronikeinheit und einer (externen) Steuereinheit für die Elektronikeinheit verbunden zu werden.

Die Kommunikationsvorrichtung ist dazu eingerichtet, Daten von der Elektronikeinheit zur Steuereinheit oder umgekehrt zu übermitteln. Insbesondere ist die Kommunikationsvorrichtung dazu eingerichtet, Befehle von der Steuereinheit an die Elektronikeinheit weiterzugeben. Die Kommunikationsvorrichtung kann bevorzugt dazu eingerichtet sein, drahtlos mit der Steuereinheit verbunden zu werden. Demensprechend können die Funktionen der Wasserentnahmevorrichtung z.B. bequem per App gesteuert werden. Dies gilt insbesondere für Reinigungsspülungen zum Zwecke der Entkeimung.

Es ist denkbar, dass die Kommunikationsvorrichtung über die Versorgungseinrichtung, insbesondere in Form des Generators mit Turbine, mit Strom versorgt wird.

In einer bevorzugten Ausführungsform weist die Wasserentnahmevorrichtung einen elektronischen Thermostat zur elektronischen Überwachung und Regelung der Wassertemperatur auf.

Vorzugsweise ist der elektronische Thermostat im Hauptkörper angeordnet.

Im Gegensatz zu traditionellen mechanischen Thermostaten, die physikalisch auf Temperatur- oder Druckänderungen reagieren, verwenden elektronische Thermostate elektronische Sensoren, Steuerungen und Aktoren, um die Wassertemperatur zu überwachen und anzupassen. Neben einer hochpräzisen Temperaturregelung ermöglichen elektronische Thermostate eine Programmierbarkeit und Fernsteuerungsmöglichkeiten der Temperierung des Wassers. Insofern ist der elektronische Thermostat vorzugsweise mit der Elektronikeinheit verbunden (wobei diese vorzugsweise über die Kommunikationsvorrichtung mit einer externen Steuereinheit verbunden ist).

In einer weiteren Ausführungsform weist die Wasserentnahmevorrichtung einen Füllstandsensor für ein Wasserbecken zur Erfassung des Füllstands von Wasser in dem Wasserbecken auf.

Damit kann ein Überlaufen des Wasserbeckens verhindert werden. Gerade beim Durchführen von Reinigungsspülungen ist die Anwesenheit von Personen oftmals nicht gegeben. Allerdings besteht dann die Gefahr, dass ein nicht gegebener (z.B. verstopfter oder unzureichender) Ablauf oder ein unterdimensioniertes Wasserbeckenvolumen zu einem Überlaufen des Beckens führen. Um dies zu verhindern, ist ein Füllstandsensor vorgesehen. Der Füllstandsensor ist bevorzugt mit der Elektronikeinheit zum Abbruch oder zur Drosselung der Wasserabgabe aus dem Auslass verbunden. Zur Stromversorgung kann vorgesehen sein, dass der Füllstandsensor mit der Versorgungseinrichtung verbunden ist.

Die Bestrahlungseinheit, insbesondere die Reaktorkammer, ist bevorzugt an die Form des Auslasses angepasst bzw. in den Auslass eingepasst. Die Reaktorkammer ist bevorzugt zylinderförmig ausgebildet. Eine Zylinderform hat den Vorteil, dass sie rotationssymmetrisch ist und Berechnungen in Zusammenhang mit der Leistung des UV-Reaktors vergleichsweise einfach sind.

Ausführungsbeispiele der Erfindung sind in der Zeichnung dargestellt und werden in der nachfolgenden Beschreibung näher erläutert. Es zeigen:
- Fig. 1: eine Wasserentnahmevorrichtung aus dem Stand der Technik in einer schematischen Darstellung,
- Fig. 2: ein erstes Ausführungsbeispiel der erfindungsgemäßen Wasserentnahmevorrichtung in einer schematischen Darstellung,
- Fig. 3: ein zweites Ausführungsbeispiel der erfindungsgemäßen Wasserentnahmevorrichtung in einer schematischen Darstellung,
- Fig. 4: ein drittes Ausführungsbeispiel der erfindungsgemäßen Wasserentnahmevorrichtung in einer schematischen Darstellung,
- Fig. 5A: ein Ausführungsbeispiel eines UV-Reaktors der erfindungsgemäßen Wasserentnahmevorrichtung in einer schematischen Explosionsdarstellung im Querschnitt,
- Fig. 5B: das in Fig. 5A dargestellte Ausführungsbeispiel in einer schematischen Explosionsdarstellung in Draufsicht,
- Fig. 6A: das Ausführungsbeispiel des UV-Reaktors in Schnittansicht im zusammengebauten Zustand,
- Fig. 6B: das Ausführungsbeispiel gemäß Fig. 6A in perspektivischer Schnittansicht,
- Fig. 7: ein Ausführungsbeispiel des Vortexerzeugers in perspektivischer Ansicht,
- Fig. 8: ein Ausführungsbeispiel des Strömungsbildners in perspektivischer Ansicht,
- Fig. 9A: ein erstes Ausführungsbeispiel eines Auslasses der erfindungsgemäßen Wasserentnahmevorrichtung in einer schematischen Darstellung in einer Seitenansicht,
- Fig. 9B: das erste Ausführungsbeispiel des Auslasses in einer schematischen Darstellung in einer Draufsicht,
- Fig. 10: ein Ausführungsbeispiel einer Versorgungseinrichtung der erfindungsgemäßen Wasserentnahmevorrichtung in einer schematischen Darstellung in Draufsicht,
- Fig. 11: ein viertes Ausführungsbeispiel der erfindungsgemäßen Wasserentnahmevorrichtung in einer schematischen Darstellung,
- Fig. 12: ein fünftes Ausführungsbeispiel der erfindungsgemäßen Wasserentnahmevorrichtung in einer schematischen Darstellung,
- Fig. 13: ein sechstes Ausführungsbeispiel der erfindungsgemäßen Wasserentnahmevorrichtung in einer schematischen Darstellung,
- Fig. 14: ein zweites Ausführungsbeispiel eines Auslasses der erfindungsgemäßen Wasserentnahmevorrichtung in einer schematischen Darstellung,
- Fig. 15A: ein erstes Ausführungsbeispiel einer Aufnahmeeinrichtung der erfindungsgemäßen Wasserentnahmevorrichtung samt aufgenommenem Auslass in einer Schnittansicht,
- Fig. 15B: ein zweites Ausführungsbeispiel einer Aufnahmeeinrichtung der erfindungsgemäßen Wasserentnahmevorrichtung samt aufgenommenem Auslass in einer Schnittansicht,
- Fig. 15C: ein siebtes Ausführungsbeispiel der erfindungsgemäßen Wasserentnahmevorrichtung in einer schematischen Darstellung, und
- Fig. 16: ein achtes Ausführungsbeispiel der erfindungsgemäßen Wasserentnahmevorrichtung in einer schematischen Darstellung.

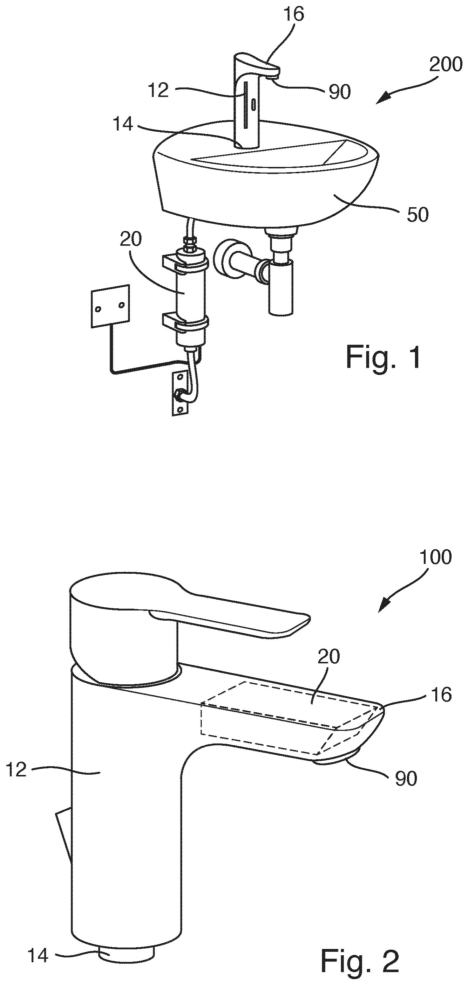

Fig. 1 zeigt eine Wasserentnahmevorrichtung aus dem Stand der Technik in einer schematischen Darstellung, versehen mit dem Bezugszeichen 200. Die Wasserentnahmevorrichtung 200 weist einen Wasserhahn mit einem Anschluss 14, einem Hauptkörper 12 und einem Auslass 16 auf, der an einem Wasserbecken 50 angebracht ist. An den Wasserhahn angeschlossen ist eine Bestrahlungseinheit zur Bestrahlung des zugeführten Wassers mit UV-Licht. Die Bestrahlungseinheit kann als UV-Reaktor 20 ausgebildet sein. Wie Fig. 1 zeigt, nimmt der UV-Reaktor der in der dargestellten Wasserentnahmevorrichtung 200 gemäß dem Stand der Technik einen verhältnismäßig großen Bauraum ein. Er ist deutlich sichtbar unter dem Wasserbecken 50 angeordnet und kann dadurch als optisch störend empfunden werden. Weiterhin ist der UV-Reaktor 20 relativ weit vom point of use 90 (d.h. dem stromabwärtsseitigen Ende des Auslasses 16) entfernt. Mithin besteht die Möglichkeit, dass Kontaminationen des von der Wasserentnahmevorrichtung 200 abzugebenden Wassers stromabwärts des UV-Reaktors bis hin zum point of use auftreten können. Eine einwandfreie Wasserqualität kann mit der Wasserentnahmevorrichtung 200 daher nicht gewährleistet werden.

Fig. 2 zeigt ein erstes Ausführungsbeispiel der erfindungsgemäßen Wasserentnahmevorrichtung 100 in einer schematischen Darstellung. Die Wasserentnahmevorrichtung 100 ist als Wasserhahn mit einem Anschluss 14, einem Hauptkörper 12 und einem Auslass 16 ausgebildet. In dem Auslass 16 befindet sich ein UV-Reaktor 20, der dazu eingerichtet ist, mittels UV-Strahlung Mikroorganismen im Wasser zu inaktivieren bzw. abzutöten. Der UV-Reaktor 20 ist unmittelbar vor dem point of use 90 angeordnet. Das von der Wasserentnahmevorrichtung 100 abgegebene Wasser ist dementsprechend bei der Entnahme "frisch" entkeimt und somit quasi keimfrei. Insbesondere kann durch den UV-Reaktor 20 sichergestellt werden, dass 99,9 % der Legionellen im Wasser inaktiviert werden. Durch die Nähe des UV-Reaktors 20 zum point of use ist auch das von der Wasserentnahmevorrichtung 100 entnommene Wasser entsprechend keimfrei.

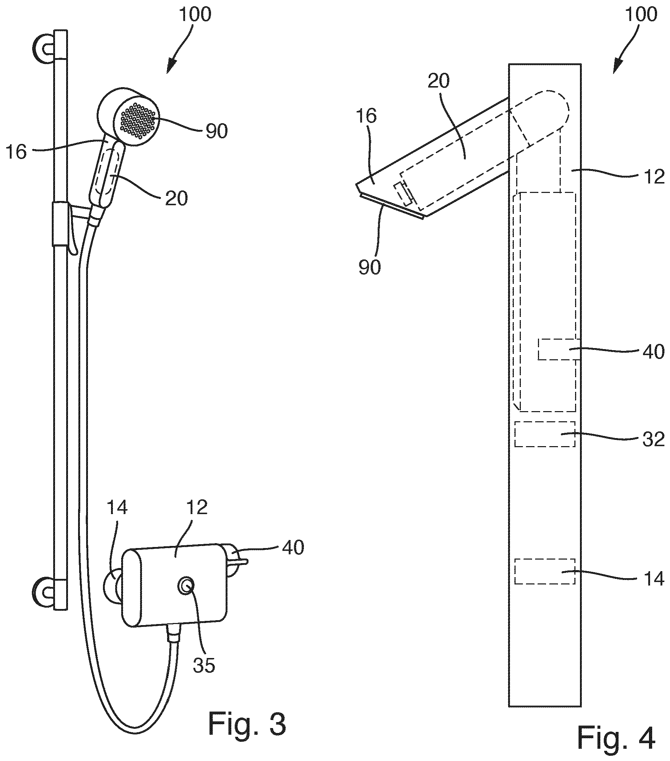

Fig. 3 zeigt ein zweites Ausführungsbeispiel der erfindungsgemäßen Wasserentnahmevorrichtung 100 in einer schematischen Darstellung. Insbesondere zeigt Fig. 3 eine als Duscharmatur ausgebildete Wasserentnahmevorrichtung 100. Die Duscharmatur verfügt über einen Hauptkörper 12, der mit einem Anschluss 14 und mit einem Auslass 16 verbunden ist.

An dem Hauptkörper 12 können in der vorliegenden Ausführungsform über an dem Hauptkörper 12 befindliche Bedienelemente verschiedene Einstellungen, die das zu entnehmende Wasser betreffen, vorgenommen werden. Beispielsweise verfügt der Hauptkörper über einen Thermostat40 und einen Taster 35 (z.B. einen Piezo-Taster) zur Auslösung eines Wasserflusses aus der Wasserentnahmevorrichtung 100.

In dem Auslass 16 befindet sich ein UV-Reaktor 20. Genauer gesagt, umfasst der Auslass 16 eine Brause mit einem Brausenkopf und einem Griff, wobei vorliegend der UV-Reaktor 20 in den Griff der Brause eingepasst ist. Der Abstand zwischen dem UV-Reaktor 20 und dem point of use 90 ist somit relativ gering. Dementsprechend ist das am point of use 90 aus der Wasserentnahmevorrichtung 100 austretende Wasser quasi keimfrei.

Fig. 4 zeigt ein drittes Ausführungsbeispiel der erfindungsgemäßen Wasserentnahmevorrichtung 100 in einer schematischen Darstellung. Fig. 4 zeigt wie Fig 3 eine als Duscharmatur ausgebildete Wasserentnahmevorrichtung 100. In dem Hauptkörper 12 sind ein elektronischer Thermostat 40 und eine Elektronikeinheit 32 angeordnet, die miteinander verbinden sind.

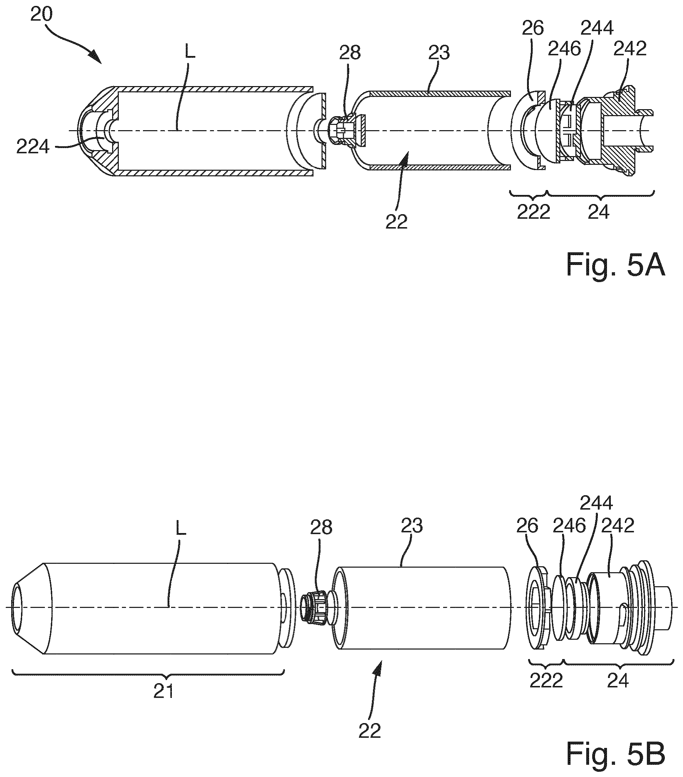

Fig. 5A zeigt ein Ausführungsbeispiel eines UV-Reaktors 20 der erfindungsgemäßen Wasserentnahmevorrichtung 100 in einer schematischen Explosionsdarstellung (entlang der Längsachse L des UV-Reaktors) im Querschnitt. Der UV-Reaktor 20 weist eine Reaktorkammer 22 mit einem Zulauf 222 und einem Ablauf 224 auf, wobei der Ablauf 224 dazu eingerichtet ist, bei Einbau in die Wasserentnahmevorrichtung 100 dem point of use 90 zugewandt angeordnet zu werden. Die Reaktorkammer 22 ist von einer Reaktorwand 23 umschlossen. Diese ist vorliegend zylinderförmig. Andere Formen sind ebenso denkbar. Ferner weist der UV-Reaktor 20 ein Bestrahlungsmodul 24 auf, wobei das Bestrahlungsmodul ein Modulgehäuse 242 zur Aufnahme einer Leiterplatte 244 mit einer oder mehreren LEDs zur Abstrahlung von Licht im ultravioletten Wellenlängenbereich, insbesondere im UV-C Wellenlängenbereich, aufweist. Das UV-Licht wird über ein Schutzglas 246 in die Reaktorkammer 22 abgegeben. Das Schutzglas 246 weist bevorzugt eine hohe Durchlässigkeit für UV-Strahlung aus. Daher wird als Schutzglas 246 vorzugsweise z.B. ein Quarzglas verwendet. Die Reaktorwand 23 ist bevorzugt zumindest im UV-C-Bereich hochreflektierend, um eine effiziente Wirkung der UV-Strahlung im Reaktor sicherzustellen. Beispielsweise ist die Reaktorwand 23 aus ePTFE hergestellt.

In dem Zulauf 222 befindet sich ein Vortexerzeuger 26 zur vortexartigen Verwirbelung des über den Zulauf 222 in die Reaktorkammer 22 einströmenden Wassers. Mit anderen Worten ist der UV-Reaktor 20 so ausgebildet, dass sich das Wasser von dem Zulauf 222 zu dem Ablauf 224 hin schraubenartig (um die Längsachse L) bewegt und dabei gleichzeitig mit UV-Licht aus dem Bestrahlungsmodul 24 bestrahlt wird. Insofern stellt der UV-Reaktor eine gleichmäßige und damit effektive Bestrahlung des Wassers mit UV-Licht sicher. Eine Wasserentnahmevorrichtung 100, die mit dem UV-Reaktor 20 ausgestattet ist, gewährleistet folglich eine zuverlässige Wasserentkeimung.

Fig. 5B zeigt das in Fig. 5A dargestellte Ausführungsbeispiel in einer schematischen Explosionsdarstellung in Draufsicht.

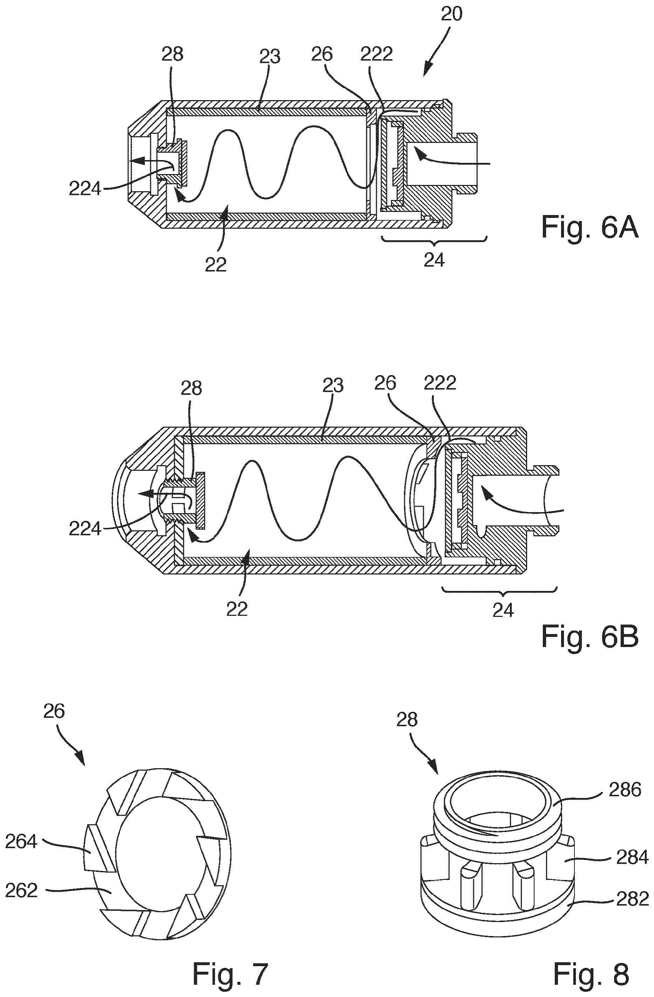

Fig. 6A zeigt das Ausführungsbeispiel des UV-Reaktors 20 aus den Fig. 5A und 5B in einer Schnittansicht im zusammengebauten Zustand. Über Pfeile wird in Fig. 6 der Lauf des Wassers durch den UV-Reaktor 20 im Betrieb anschaulich dargestellt. Nach Durchlauf des Zulaufs 222 bzw. Passieren das Vortexerzeugers 26 gelangt das Wasser in einer rotationsförmigen Bewegung zum Auslass 224. An dem Auslass ist ein Strömungsbildner 28 angeordnet. Dieser dient dazu, einen definierten Wasserfluss im UV-Reaktor 20 zu erhalten. Insbesondere dient der Strömungsbildner 28 dazu, eine Strömung, die lediglich in der Mitte bzw. entlang der Längsachse L des UV-Reaktors 20 verläuft, zu verhindern. Mit anderen Worten ausgedrückt, ist der Strömungsbildner 28 dazu eingerichtet, ein "Durchrauschen" des Wassers durch die Reaktorkammer 22 zu verhindern.

Fig. 6B das Ausführungsbeispiel gemäß Fig. 6A in perspektivischer Schnittansicht. In dieser Ansicht ist insbesondere der Vortexerzeuger 26 deutlich erkennbar. Der Vortexerzeuger 26 umfasst vorliegend eine ringförmige Platte mit mehreren Durchströmabschnitten, die dazu eingerichtet sind, das von radial außen kommende Wasser so in die Reaktorkammer zu führen, dass es mit einer schraubenartigen Bewegung in die Reaktorkammer 22 gelangt.

Der Vortexerzeuger 26 und der Strömungsbildner 28 dienen dazu, zu verhindern, dass das Wasser nicht auf direktem Weg vom Zulauf 222 zum Ablauf 224 der Reaktorkammer 22 gelangt. Ferner wird verhindert, dass die Bestrahlung nur den Randbereich des Wassers desinfizieren kann. Durch den Vortexerzeuger 26 wird das Wasser in einen Drall versetzt, damit quasi das gesamte Volumen bestrahlt wird und die Verweilzeit im Reaktor erhöht werden kann. Der Strömungsbildner 28 (auch Wasserdurchbruchverhinderung genannt) gewährleistet, dass das Wasser nicht zu schnell aus dem Reaktor austritt. Dazu ist der Strömungsbildner so eingerichtet, dass er eine Strömung des Wassers parallel zur Längsachse des Reaktors 20 auf den Auslauf 224 zu verhindert.

Fig. 7 zeigt ein Ausführungsbeispiel des Vortexerzeugers 26 in perspektivischer Ansicht. In diesem Ausführungsbeispiel ist der Vorzexerzeuger 26 als ringförmiges Plättchen ausgebildet, das dazu eingerichtet ist, stromabwärts des Schutzglases 246 des Bestrahlungsmoduls 24 innerhalb bzw. vor der Reaktorkammer 22 angeordnet zu werden. Auf dem ringförmigen Plättchen sind (dreickförmige) Erhebungen 264 so angeordnet, dass sich zwischen jeweils zwei Erhebungen 264 ein Durchströmabschnitt 262 ausbildet. Vorliegend sind die Erhebungen 264 und die Durchströmabschnitte 262 gleichmäßig um den zentralen Bereich des Plättchens angeordnet. Die Erhebungen 264 sind so ausgebildet, dass das durch die Durchströmabschnitte 262 von außen einfließende Wasser einen Drehimpuls erlangt, der letztlich zu einer vortexförmigen Bewegung des Wassers in die Reaktorkammer 22 hinein führt.

Es ist grundsätzlich auch denkbar, dass Durchströmabschnitte bspw. in Form eines Helixabschnittes ausgebildet sind.

Fig. 8 zeigt ein Ausführungsbeispiel des Strömungsbildners 28 in perspektivischer Ansicht. Der Strömungsbildner 28 weist eine Grundplatte 282 auf, auf deren Oberfläche mehrere Stege 284 in radialer Richtung angeordnet sind, wobei die Stege 284 auf der, der Grundplatte 282 gegenüberliegenden Seite, über einen zylinderförmigen Ring 286 verbunden sind. Der zylinderförmige Ring 286 ist vorliegend mit einem Gewinde versehen, um den Strömungsbildner am Auslauf 224 befestigen zu können, sodass die Oberfläche der Grundplatte 282 senkrecht zur Längsachse der Reaktorkammer verläuft. Die Grundplatte 282 ist mithin im Wesentlichen vor dem Auslauf 224 angeordnet und verhindert, dass Wasser direkt aus der Reaktorkammer 22 in den Auslauf 224 treten kann. Um aus der Reaktorkammer austreten zu können muss das Wasser vielmehr durch die hinter der Grundplatte 282 durch seitliche Öffnungen treten, die durch die Stege 284 gebildet werden. Das Wasser in der Reaktorkammer wird somit durch den Strömungsbildner abgebremst und ein Durchbruch aus dem Auslauf 224 verhindert.

Der erfindungsgemäße Vortexerzeuger 26 und/oder der erfindungsgemäße Strömungsbildner können prinzipiell auch in einem UV-Reaktoren 20 eingesetzt werden, der nicht im Auslass 16 einer Wasserentnahmevorrichtung 100 angeordnet ist. Mit anderen Worten ist eine Wasserentnahmevorrichtung 100 denkbar, die sämtliche oben genannten Merkmale sowie einen Vortexerzeuger 26 und/oder einen Strömungsbildner 28 aufweist, wobei das Bestrahlungsmodul aber nicht notwendigerweise im Auslass 16 angeordnet ist.

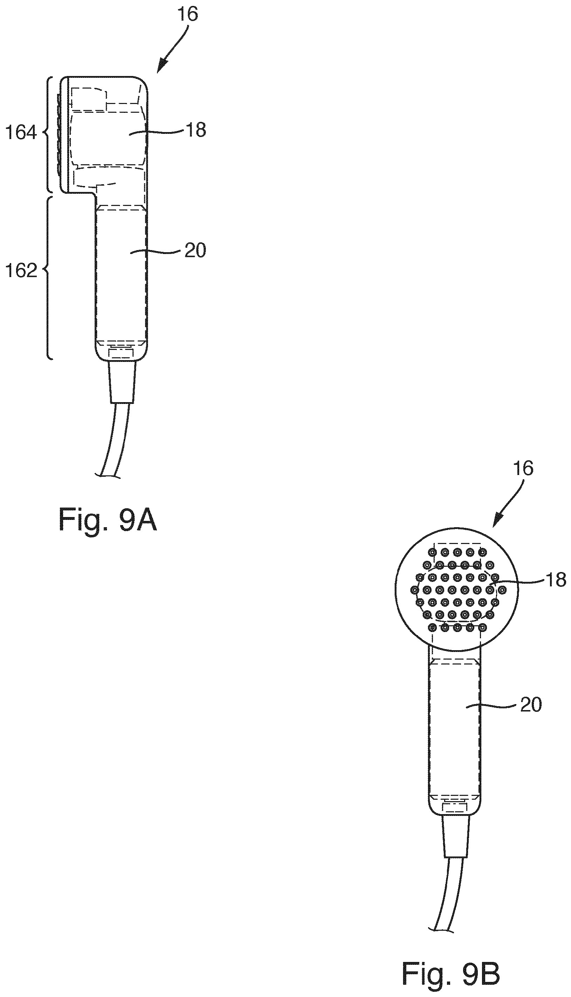

Fig. 9A zeigt ein erstes Ausführungsbeispiel eines Auslasses 16 der erfindungsgemäßen Wasserentnahmevorrichtung 100 in einer schematischen Darstellung in einer ersten Schnittansicht. Der Auslass 16 ist in dem vorliegenden Ausführungsbeispiel als Brause mit einem Griff 162 und einem Brausenkopf 164 ausgebildet, wobei sich in dem Griff ein UV-Reaktor 20 befindet und wobei in dem Brausenkopf 164 eine Versorgungseinrichtung 18 angeordnet ist. Die Versorgungseinrichtung 18 kann beispielsweise aus einer Generator-Turbinen-Kombination bestehen, wobei eine Turbine durch das durch den Brausenkopf 164 strömende Wasser angetrieben wird, sodass ein angeschlossener Generator Strom erzeugen kann, um damit insbesondere den UV-Reaktor 20 mit Energie zu versorgen.

Fig. 9B zeigt das erste Ausführungsbeispiel des Auslasses in einer schematischen Darstellung in einer Draufsicht.

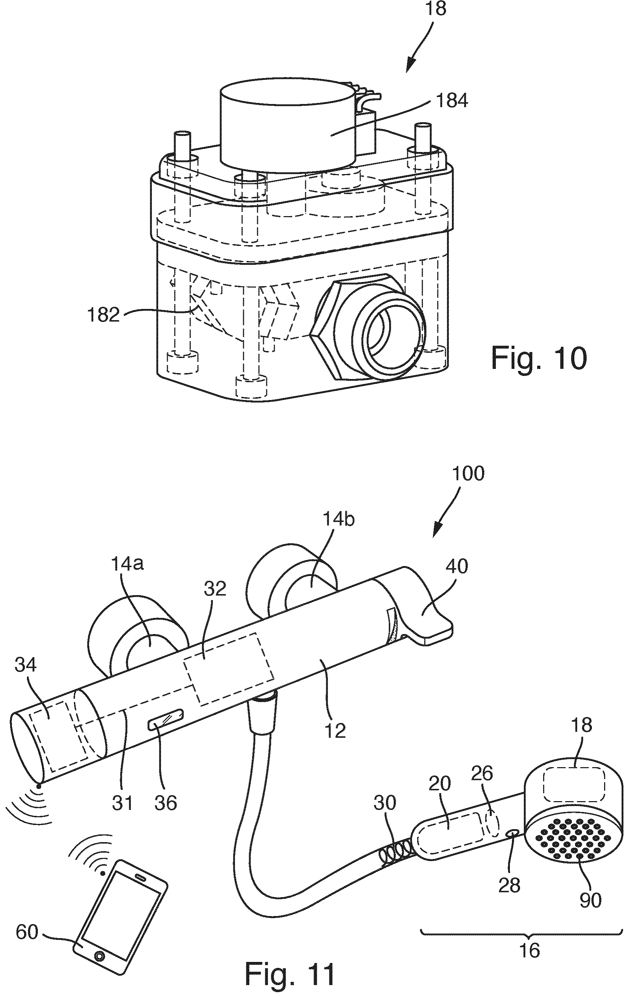

Fig. 10 zeigt ein Ausführungsbeispiel einer Versorgungseinrichtung 18 der erfindungsgemäßen Wasserentnahmevorrichtung 100 in einer schematischen Darstellung in Draufsicht. Die Versorgungseinrichtung 18 ist insbesondere dazu eingerichtet den UV-Reaktor 20 (nicht dargestellt) mit elektrischer Energie zu versorgen. Es ist aber auch denkbar, dass die Versorgungeinrichtung 18 andere Komponenten der Wasserentnahmevorrichtung mit elektrischer Energie versorgt. Beispielsweise könnte die Versorgungseinrichtung 18 neben oder alternativ zum UV-Reaktor 20 Überwachungseinrichtung, eine Anzeigeeinrichtung, eine Elektronikeinheit, eine Kommunikationsvorrichtung, einen elektrischen Thermostat 40, einen Füllstandsensor und dergleichen (alle nicht dargestellt) mit Strom versorgen. Dabei müsste eine Stromversorgung nicht zwangsweise direkt durch die Versorgungseinrichtung 18 erfolgen, sondern könnte auch über eine Speichereinrichtung für die elektrische Energie erfolgen. Die Speichereinrichtung kann mit der Versorgungseinrichtung 18 verbunden sein und dazu eingerichtet sein, von der Versorgungseinrichtung 18 erzeugte Energie zu speichern und diese bei Bedarf an eine oder mehrere der genannten Komponenten bzw. Verbraucher abzugeben. Prinzipiell kann die Versorgungseinrichtung 18 in dem Hauptkörper 12 und/oder in dem Auslass 16 angeordnet sein.

In dem in Fig. 10 gezeigten Ausführungsbeispiel der Versorgungseinrichtung 18 weist die Versorgungseinrichtung 18 eine Turbine 182 und einen mit der Turbine 182 verbunden Generator 184 auf. Die Turbine 182 bzw. deren Turbinenschaufeln ist dazu eingerichtet von dem Wasser, das durch die Wasserentnahmevorrichtung 100 strömt, angetrieben zu werden. Der an die Turbine 182 angeschlossene Generator 184 kann dann aus der Turbinenbewegung elektrische Energie erzeugen und diese elektrischen Komponenten in der Wasserentnahmevorrichtung 100, beispielsweise dem UV-Reaktor 20, zur Verfügung stellen. Eine Wasserentnahmevorrichtung 100, die mit der genannten Versorgungseinrichtung 18 ausgebildet ist, ist dazu in der Lage, sich selbst mit Energie zu versorgen. Folglich können auch Wasserentnahmevorrichtungen 100, die sich fernab von einer Steckdose oder dergleichen befinden, quasi keimfreies Wasser liefern.

Fig. 11 zeigt ein viertes Ausführungsbeispiel der erfindungsgemäßen Wasserentnahmevorrichtung 100 in einer schematischen Darstellung. In dem vierten Ausführungsbeispiel ist die Wasserentnahmevorrichtung 100 als Duscharmatur mit einer Brause als Auslass 16 ausgebildet.

Fig. 11 zeigt insbesondere einen Hauptkörper 12 mit zwei Anschlüssen 14a und 14b, wobei Anschluss 14a als Warmwasseranschluss und Anschluss 14b als Kaltwasseranschluss ausgebildet ist. Der Hauptkörper 12 ist dazu eingerichtet an einer Wand angeordnet zu werden. An dem Hauptkörper 12 befinden sich mehrere Bedienelemente. Mit der Bezugsziffer 40 versehen ist ein Thermostat zur Einstellung der Wassertemperatur am point of use 90. Ferner ist an dem Hauptkörper 12 eine Sensoreinheit in Form eines Näherungssensors 36 angeordnet, der dazu eingerichtet ist, bei Erfassung einer Bewegung die Wasserabgabe zu aktivieren bzw. zu deaktivieren. Der Näherungssensor 36 ist mit einer Elektronikeinheit 32 in dem Hauptkörper 12 verbunden. Ferner befindet sich in dem Hauptkörper 12 eine Kommunikationsvorrichtung 34 zur Kommunikation mit einer externen Steuereinheit 60, wobei die Kommunikation vorliegend drahtlos erfolgt. Die Steuereinheit 60 kann beispielsweise als Smartphone, Tablet oder dergleichen ausgebildet sein. Dementsprechend kann der Benutzer der Wasserentnahmevorrichtung 100 diese aus der Ferne steuern. So können über die externe Steuereinheit 60 Funktionen der Elektronikeinheit 32 programmiert werden. Insbesondere kann damit eine Steuerung von Reinigungsspülungen wie etwa eine Hygienespülung oder eine thermische Desinfektion mit der externen Steuereinheit 60 erfolgen.

An den Hauptkörper 12 angeschlossen ist der als Brause ausgebildete Auslass 16. Der Auslass 16 ist über eine lösbare Verbindung 30 mit dem Hauptkörper 12 verbunden. Bei der lösbaren Verbindung 30 kann es sich beispielsweise um eine Schraubverbindung oder um eine Steckverbindung handeln.

In dem Auslass 16 befinden sich ein UV-Reaktor 20 und eine Versorgungseinrichtung 18, die den UV-Reaktor 20 mit elektrischer Energie versorgt. Bei der Versorgungseinrichtung 18 kann es sich beispielsweise um eine Batterie handeln. Vorliegend ist die Versorgungseinrichtung 18 in dem Auslass 16 stromabwärts von dem UV-Reaktor angeordnet. In dem Auslass befinden sich ferner eine Überwachungseinrichtung 26 zur Überwachung der Leistung des UV-Reaktors 20 und eine Anzeigeeinrichtung 28, die dazu eingerichtet ist, eine Anzeige in Abhängigkeit von der überwachten Leistung auszugeben. Die Überwachungseinrichtung 26 kann beispielsweise überwachen, ob der UV-Reaktor 20 in Betrieb ist oder nicht. In Abhängigkeit davon kann die Anzeigeeinrichtung 28 anzeigen, wie der Betriebszustand des UV-Reaktors 20 ist. Beispielsweise kann die Anzeigeeinrichtung 28 als Leuchtelement ausgebildet sein, das aufleuchtet, wenn der UV-Reaktor 20 nicht in Betrieb ist (und ansonsten nicht aufleuchtet; oder umgekehrt). Es ist denkbar, dass auch die Überwachungseinrichtung 26 mit der Steuereinrichtung 60 in Verbindung steht, sodass der Zustand, insbesondere der Betriebszustand, des UV-Reaktors 20 durch die Steuereinrichtung 60 überwacht werden kann.

Durch die Lösbarkeit des Auslass 16 von dem Hauptkörper 12 durch die lösbare Verbindung 30 ist der UV-Reaktor 20 leicht zugänglich. Somit kann dieser in einfacher Weise ausgetauscht oder gewartet werden. Insbesondere wird damit eine Reinigung des UV-Reaktors 20, insbesondere von dessen Bestrahlungsmodul, ermöglicht.

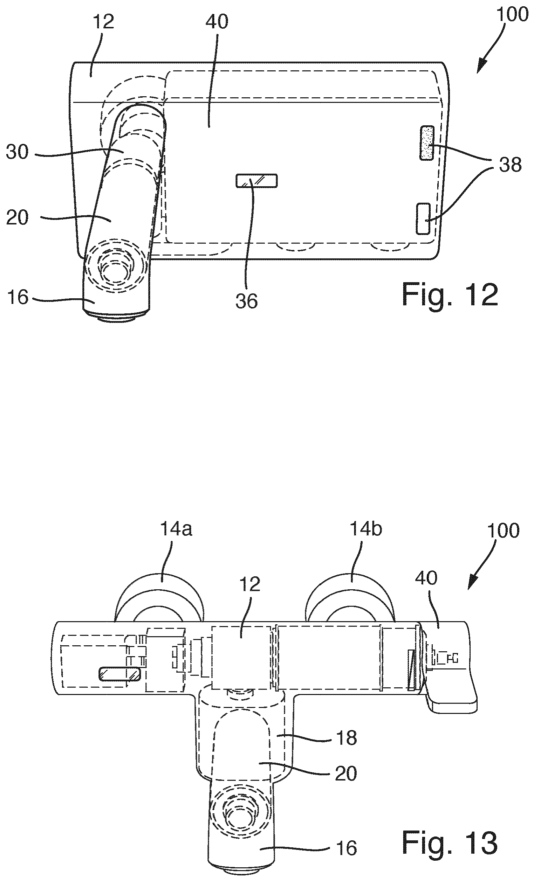

Fig. 12 zeigt ein fünftes Ausführungsbeispiel der erfindungsgemäßen Wasserentnahmevorrichtung 100 in einer schematischen Darstellung. In diesem Ausführungsbeispiel weist die Wasserentnahmevorrichtung 100 einen elektronischen Thermostat 40 zur elektronischen Überwachung und Regelung der Wassertemperatur auf. Der elektronische Thermostat 40 ist im Hauptkörper 12 angeordnet and mit einer Elektronikeinheit (nicht dargestellt) verbunden. Die Regelung der Temperatur kann vorliegend vom Benutzer berührungslos über Temperatureinstellungssensoren 38 erfolgen. Die Auslösung der Wasserabgabe erfolgt in diesem Ausführungsbeispiel ebenfalls berührungslos über den Näherungssensor 36. Ferner zeichnet sich die Wasserentnahmevorrichtung 100 in diesem Ausführungsbeispiel dadurch aus, dass der Auslass 16 über eine lösbare Verbindung 30 mit dem Hauptkörper 12 verbunden ist. D.h. der Auslass 16 kann bspw. zu Reinigungszwecken von dem Hauptkörper 12 getrennt werden.

Fig. 13 zeigt ein sechstes Ausführungsbeispiel der erfindungsgemäßen Wasserentnahmevorrichtung 100 in einer schematischen Darstellung. In diesem Ausführungsbeispiel verfügt die Wasserentnahmevorrichtung 100 über zwei Anschlüsse 14a und 14b, wobei der Anschluss 14a als Anschluss für Warmwasser und der Anschluss 14b als Anschluss für Kaltwasser ausgebildet ist. Über eine nicht dargestellte Mischvorrichtung kann, gesteuert über den Thermostat 40, die Temperatur des am Auslass 16 austretenden Wassers eingestellt werden.

In dem vorliegenden Ausführungsbeispiel ist die Versorgungseinrichtung 18 stromaufwärts des UV-Reaktors 20 in dem Auslass 16 angeordnet.

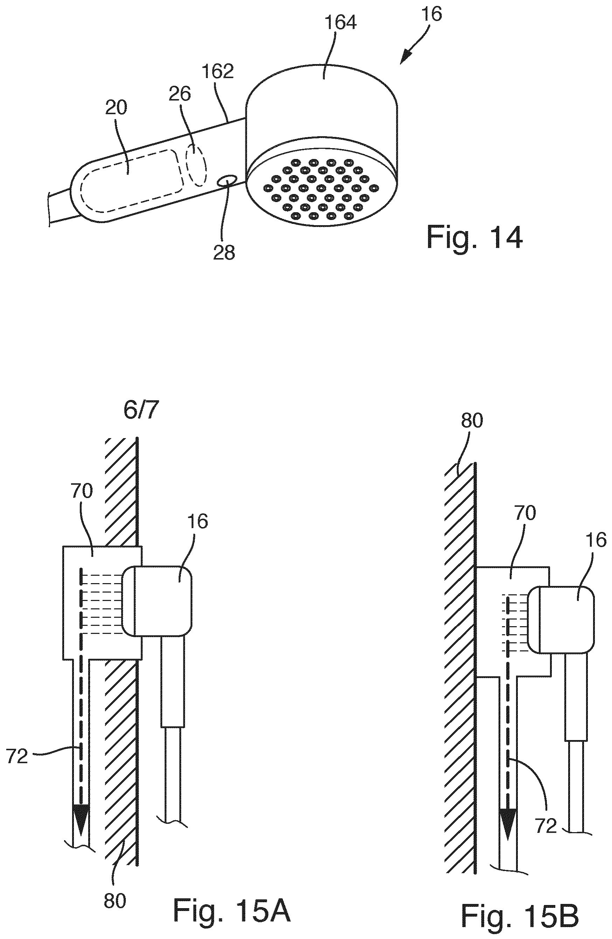

Fig. 14 zeigt ein zweites Ausführungsbeispiel eines Auslasses 16 der erfindungsgemäßen Wasserentnahmevorrichtung 100 in einer schematischen Darstellung. Der Auslass 16 ist als Brause mit einem Griff 162 und einem Brausenkopf 164 ausgebildet, wobei der UV-Reaktor 20 der Wasserentnahmevorrichtung 100 in dem Griff 162 angeordnet ist. Neben dem UV-Reaktor 20 ist in dem Griff 162 eine Überwachungseinrichtung 26 zur Überwachung der Leistung des UV-Reaktors 20 angeordnet sowie eine Anzeigeeinrichtung 28 in Form eines Leuchtelements. Die Überwachungseinrichtung 26 ist insbesondere dazu eingerichtet, die von dem Bestrahlungsmodul 24 abgegebene UV-Strahlung zu überwachen. Wenn beispielsweise die Leistung wegen Ausfalls einer von mehreren UV-LEDs in dem Bestrahlungsmodul 24 ausfällt, kann die Überwachungseinrichtung 26 dies als Leistungsabfall des UV-Reaktors 20 registrieren. Die Überwachungseinrichtung 26 kann die Leistung des UV-Reaktors 20 beispielsweise anhand einer diskreten oder kontinuierlichen Skala bewerten bzw. einordnen und das entsprechende Ergebnis der Anzeigeeinrichtung 28 zur Verfügung stellen. Dabei ist denkbar, dass die Anzeigeeinrichtung grünliches Licht abstrahlt, wenn die Leistung als hoch zu bewerten ist bzw. über einer ersten vorbestimmten Leistung liegt, gelbliches Licht abstrahlt, wenn die Leistung als mittelmäßig zu bewerten ist bzw. unter oder gleich der ersten vorbestimmten Leistung ist und über einer zweiten vorbestimmten Leistung liegt, und rötliches Licht abstrahlt, wenn die Leistung als niedrig zu bewerten ist bzw. unter oder gleich der zweiten vorbestimmten Leistung ist, wobei die erste vorbestimmte Leistung höher ist als die zweite vorbestimmte Leistung.

Fig. 15A zeigt ein erstes Ausführungsbeispiel einer Aufnahmeeinrichtung 70 der erfindungsgemäßen Wasserentnahmevorrichtung 100 samt aufgenommenem Auslass 16 in einer Schnittansicht. Die Aufnahmeeinrichtung 70 zur Aufnahme des Auslasses 16 (hier einem Brausenkopf) ist dabei in einer Wand 80 angeordnet, sodass die Abführeinheit 72 zum Abführen des Wassers aus dem Auslass 16 unterputz angeordnet ist. Bei einer Reinigungsspülung der Wasserentnahmevorrichtung 100 ist das abfließende Wasser für den Benutzer somit überhaupt nicht sichtbar. Die Abführeinheit 72 ist als Wasserrohr ausgebildet und vorzugsweise mit dem Abwasserrohr für die Wasserentnahmevorrichtung 100 verbunden. Der gezeigte Pfeil zeigt die Fließrichtung des Wassers durch die Abführeinheit 72 an.

Die Form des Auslasses 16 bzw. zumindest die Form des Teils des Auslasses 16, der dazu eingerichtet ist, von der Aufnahmeeinrichtung 70 aufgenommen zu werden, ist an die Form der Aufnahmeeinrichtung 70 angepasst. Bevorzugt passt der Auslass 16 bzw. Teile davon formschlüssig in die Aufnahmeeinrichtung 70. Die Form kann dabei rund oder eckig sein oder irgendeine andere Form sein. Alternativ oder zusätzlich zu dem genannten Formschluss kann der Auslass 16 dazu eingerichtet sein, von der Aufnahmeeinrichtung 70 kraftschlüssig aufgenommen zu werden bzw. die Aufnahmeeinrichtung 70 kann dazu eingerichtet sein, den Auslass 16 kraftschlüssig aufzunehmen.

Um einen festen Sitz des Auslasses 16 in der Aufnahmeeinrichtung 70 zu gewährleisten, kann vorgesehen sein, dass der Auslass 16 und die Aufnahmeeinrichtung 70 jeweils über ein magnetisches Element verfügen, sodass der Auslass 16 über eine magnetische Kraft in der Aufnahmeeinrichtung 70 gehalten werden kann. Prinzipiell sind auch andere Möglichkeiten denkbar, wie der Auslass 16 (fest) in die Aufnahmeeinrichtung 70 aufgenommen werden kann. Beispielsweise könnten drehbare Verschlusshebel oder dergleichen an der Aufnahmevorrichtung 70 zum Halten des Auslasses 16 vorgesehen sein.

Fig. 15B zeigt ein zweites Ausführungsbeispiel einer Aufnahmeeinrichtung 70 der erfindungsgemäßen Wasserentnahmevorrichtung 100 samt aufgenommenem Auslass 16 in einer Schnittansicht. Im Unterschied zu dem ersten Ausführungsbeispiels befinden sich in dem zweiten Ausführungsbeispiel sowohl die Aufnahmeeinrichtung 70 als auch die Abführeinheit 72 auf der Wand 80, d.h. aufputz. Ansonsten unterscheiden sich die Ausführungsbespiele nicht.

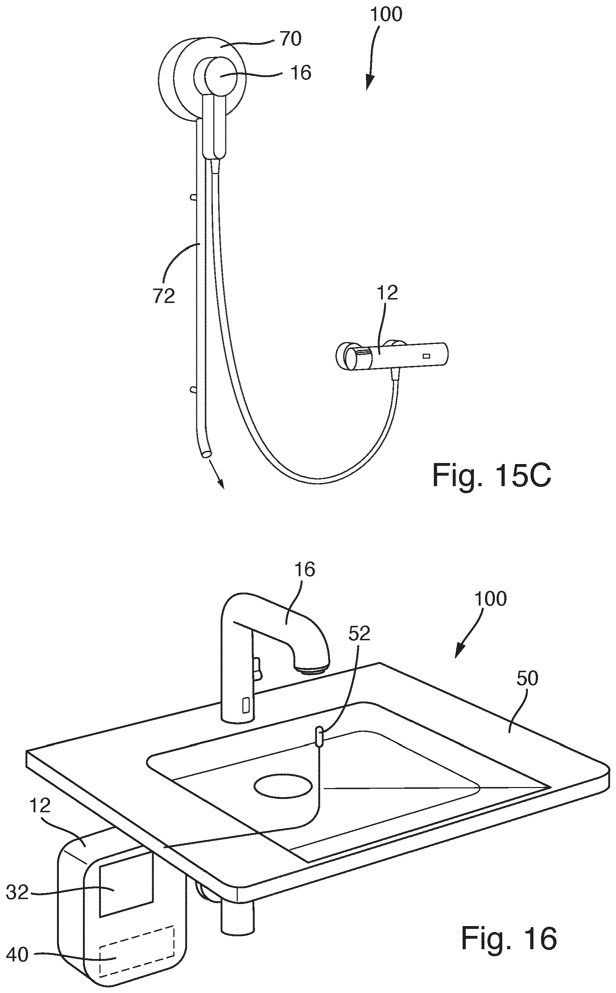

Fig. 15C zeigt ein siebtes Ausführungsbeispiel der erfindungsgemäßen Wasserentnahmevorrichtung 100 mit dem zweiten Ausführungsbeispiel der Aufnahmeeinrichtung 70 in einer schematischen Darstellung. Das Wasser kann von der Abführeinheit 72 beispielsweise in ein Wasserbecken (nicht dargestellt) geleitet werden.

Grundsätzlich ist auch eine Wasserentnahmevorrichtung ohne Bestrahlungseinheit bzw. UV-Reaktor im Auslass denkbar, die über eine Aufnahmeeinrichtung 70 und eine Abführeinheit 72 gemäß der Ausführungsbeispiele aus den Fig. 15A bis 15C verfügt. Hierzu kann die Wasserentnahmevorrichtung sämtliche gezeigten Merkmale, einschließlich der Versorgungseinrichtung 18, der Elektronikeinheit 32, der Kommunikationseinrichtung 34, der Steuereinheit 60, dem (elektrischen) Thermostat 40, in jeglicher Kombination, aber eben ohne den UV-Reaktor 20, aufweisen. Mit anderen Worten, ist eine Wasserentnahmevorrichtung mit einem Hauptkörper 12, einem mit dem Hauptkörper 12 verbundenen Anschluss 14 zur Zufuhr von Wasser in den Hauptkörper 12 und einem mit dem Hauptkörper 12 verbundenen Auslass 16 zur Abgabe des zugeführten Wassers, denkbar, die eine Aufnahmeeinrichtung 70 zur Aufnahme des Auslasses 16 umfasst, wobei die Aufnahmeeinrichtung 70 mit einer Abführeinheit 72 zum Abführen des Wassers einer Reinigungsspülung eingerichtet ist. Die genannte Wasserentnahmevorrichtung kann sämtliche Merkmale der abhängigen Ansprüche (oder der oben genannten Merkmale) aufweisen, sofern sich diese nicht lediglich auf die Bestrahlungseinheit bzw. den UV-Reaktor beziehen.

Fig. 16 zeigt ein achtes Ausführungsbeispiel der erfindungsgemäßen Wasserentnahmevorrichtung 100 in einer schematischen Darstellung. In diesem Ausführungsbeispiel weist die Wasserentnahmevorrichtung 100 einen Füllstandsensor 52 für ein Wasserbecken 50 zur Erfassung des Füllstands von Wasser in dem Wasserbecken 50 auf. Der Füllstandsensor ist mit einer Elektronikeinheit 32 verbunden. Der Füllstandsensor 52 gibt Daten, die den Füllstand des Wasserbeckens 50 betreffen, an die Elektronikeinheit 32 weiter, wobei diese vorzugsweise dazu eingerichtet ist, bei Erreichen eines vorbestimmten Füllstandes eine Drosselung oder einen Abbruch der Wasserabgabe durch die Wasserentnahmevorrichtung 100 in das Wasserbecken 50 zu veranlassen. Zu diesem Zweck kann die Elektronikeinheit 32 mit einer Absperreinrichtung der Wasserentnahmevorrichtung 100 verbunden sein.

In dem dargestellten Ausführungsbeispiel ist der Hauptkörper 12 unter dem Wasserbecken 50 angeordnet. In dem Hauptkörper 12 befindet sich die Elektronikeinheit 32. Weitere Komponenten sind in dem Hauptkörper ebenfalls denkbar, wie beispielweise ein elektronischer Thermostat 40.

Prinzipiell ist eine Wasserentnahmevorrichtung denkbar, bei welcher der UV-Reaktor 20 anstatt im Auslass 16, wie bspw. in Fig. 2 gezeigt, im Hauptkörper 12 oder im Anschluss 14 angeordnet ist, also vorliegend unter dem Wasserbecken 50, wobei in dem Hauptkörper 12 neben dem UV-Reaktor 20 auch ein elektronischer Thermostat 40 und/oder eine Überwachungseinrichtung 26 (zur Überwachung der Leistung des UV-Reaktors 20) angeordnet ist (nicht dargestellt). Ferner ist denkbar, dass an dem Hauptkörper 12 oder dem Auslass 16 eine Anzeigeeinrichtung 28 angeordnet ist, wobei diese dazu eingerichtet ist, eine Anzeige in Abhängigkeit von der überwachten Leistung auszugeben. Mit anderen Worten, ist eine Wasserentnahmevorrichtung mit einem Hauptkörper 12, einem mit dem Hauptkörper 12 verbundenen Anschluss 14 zur Zufuhr von Wasser in den Hauptkörper 12 und einem mit dem Hauptkörper 12 verbundenen Auslass 16 zur Abgabe des zugeführten Wassers, denkbar, wobei die Wasserentnahmevorrichtung ferner eine Bestrahlungseinheit zur Bestrahlung des zugeführten Wassers mit UV-Licht aufweist, wobei die Bestrahlungseinheit als UV-Reaktor (i.S.d. Anspruchs 1) ausgebildet ist, wobei der UV-Reaktor im Hauptkörper 12 und/oder im Anschluss 14 angeordnet ist. Die genannte Wasserentnahmevorrichtung kann sämtliche Merkmale der abhängigen Ansprüche (oder der oben genannten Merkmale) aufweisen, sofern kein Widerspruch zur genannten Anordnung besteht. Eine derartige Wasserentnahmevorrichtung ist in den Zeichnungen nicht dargestellt.

## Patentansprüche

1. Wasserentnahmevorrichtung (100) mit
einem Hauptkörper (12),
einem mit dem Hauptkörper (12) verbundenen Anschluss (14) zur Zufuhr von Wasser in den Hauptkörper (12),
einem mit dem Hauptkörper (12) verbundenen Auslass (16) zur Abgabe des zugeführten Wassers, und
einer Bestrahlungseinheit zur Bestrahlung des zugeführten Wassers mit UV-Licht, wobei die Bestrahlungseinheit im Auslass (16) angeordnet ist,
**dadurch gekennzeichnet, dass** die Bestrahlungseinheit als UV-Reaktor (20) ausgebildet ist, wobei der UV-Reaktor (20) eine abgeschlossene Reaktorkammer (22) mit einem Zulauf (222) und einem Ablauf (224) für das Wasser aufweist sowie ein an oder in der Reaktorkammer (22) angeordnetes Bestrahlungsmodul (24), wobei das Bestrahlungsmodul (24) dazu eingerichtet ist, das Wasser in der Reaktorkammer (22) mit UV-Strahlung zur Inaktivierung von Mikroorganismen in dem Wasser zu bestrahlen.

2. Wasserentnahmevorrichtung (100) gemäß Anspruch 1,
wobei das Bestrahlungsmodul (24) zulaufseitig angeordnet ist.

3. Wasserentnahmevorrichtung (100) gemäß Anspruch 1 oder 2,
wobei der UV-Reaktor (20) ferner einen an oder in der Reaktorkammer (22) angeordneten Vortexerzeuger (26) aufweist, wobei der Vortexerzeuger (26) dazu eingerichtet eine vortexartige Bewegung des Wassers zwischen dem Zulauf (222) und dem Ablauf (224) zu bewirken.

4. Wasserentnahmevorrichtung (100) gemäß einem der vorigen Ansprüche, wobei das Bestrahlungsmodul (24) eine oder mehrere UV-Lichtquellen aufweist, die dazu eingerichtet sind UV-Licht im Wellenlängenbereich von 200 nm bis 280 nm, bevorzugt im Wellenlängenbereich zwischen 250 nm und 270 nm, insbesondere bevorzugt im Wellenlängenbereich zwischen 260 nm und 270 nm abzustrahlen.

5. Wasserentnahmevorrichtung (100) gemäß einem der vorigen Ansprüche, ferner mit einer Versorgungseinrichtung (18) zur Versorgung des UV-Reaktors (20) mit elektrischer Energie.

6. Wasserentnahmevorrichtung (100) gemäß einem der vorigen Ansprüche, wobei die Versorgungseinrichtung (18) eine Turbine (182) und einen mit der Turbine verbunden Generator (184) aufweist, wobei die Turbine (182) dazu eingerichtet ist, von dem zugeführten Wasser in Rotation versetzt zu werden, und der Generator (184) dazu eingerichtet ist, die Rotationsenergie aus der Turbine (182) in elektrische Energie umzuwandeln.

7. Wasserentnahmevorrichtung (100) gemäß einem der vorigen Ansprüche, wobei der Auslass (16) trennbar mit dem Hauptkörper (12) verbunden ist.

8. Wasserentnahmevorrichtung (100) gemäß einem der vorigen Ansprüche, wobei die Wasserentnahmevorrichtung (100) als elektronisch gesteuerte Wasserentnahmevorrichtung (100) mit einer Elektronikeinheit (32) ausgebildet ist.

9. Wasserentnahmevorrichtung gemäß Anspruch 8,
wobei die Elektronikeinheit (32) dazu eingerichtet ist, eine Reinigungsspülung durch den Auslass zu veranlassen.

10. Wasserentnahmevorrichtung (100) gemäß Anspruch 8 oder 9,
ferner mit einer Überwachungseinrichtung (26) zur Überwachung der Leistung des UV-Reaktors (20).

11. Wasserentnahmevorrichtung (100) gemäß Anspruch 10,
ferner mit einer Anzeigeeinrichtung (28), die dazu eingerichtet ist, eine Anzeige in Abhängigkeit von der überwachten Leistung auszugeben.

12. Wasserentnahmevorrichtung (100) gemäß einem der vorigen Ansprüche, ferner mit einer Aufnahmeeinrichtung (70) zur Aufnahme des Auslasses (16), wobei die Aufnahmeeinrichtung (70) mit einer Abführeinheit (72) zum Abführen des Wassers der Reinigungsspülung eingerichtet ist.

13. Wasserentnahmevorrichtung (100) gemäß einem der Ansprüche 8 bis 12, ferner mit einer Kommunikationsvorrichtung (34), die dazu eingerichtet ist, mit der Elektronikeinheit (32) und einer Steuereinheit (60) für die Elektronikeinheit (32) verbunden zu werden.

14. Wasserentnahmevorrichtung (100) gemäß Anspruch 13,
wobei die Kommunikationsvorrichtung (34) dazu eingerichtet ist, drahtlos mit der Steuereinheit (60) verbunden zu werden.

15. Wasserentnahmevorrichtung (100) gemäß einem der Ansprüche 8 bis 14, ferner mit einem elektronischen Thermostat (40) zur elektronischen Überwachung und Regelung der Wassertemperatur.

16. Wasserentnahmevorrichtung (100) gemäß einem der Ansprüche 8 bis 15, ferner mit einem Füllstandsensor (52) für eine Wasserbecken (50) zur Erfassung des Füllstands von Wasser in dem Wasserbecken (50) aufweist.
